Europäisches Patentamt

European Patent Office

Office européen des brevets

(11) Publication number: **0 306 567**
**A1**

## EUROPEAN PATENT APPLICATION

(21) Application number: **87307869.5**

(22) Date of filing: **07.09.87**

(51) Int. Cl.⁴: **H01M 8/02 , H01M 2/16**

(43) Date of publication of application:
**15.03.89 Bulletin 89/11**

(84) Designated Contracting States:
**AT BE CH DE ES FR GB GR IT LI LU NL SE**

(71) Applicant: **JAPAN GORE-TEX, INC.**
**42-5, 2-chome Akazutsumi**
**Setagaya-ku Tokyo 156(JP)**

(72) Inventor: **Kato, Hiroshi**
**Minamigata 123 Yoshinaga-cho**
**Wake-gun Okayama(JP)**

(74) Representative: **Taylor, Derek George et al**
**Mathisen, Macara & Co. The Coach House**
**6-8 Swakeleys Road**
**Ickenham Uxbridge UB10 8BZ(GB)**

(54) A fuel cell electrolyte matrix and a method for its manufacture.

(57) A fuel cell electrolyte matrix is used by mixing 6 to 60 parts by weight of polytetrafluoroethylene with 40 to 94 parts by weight of a mixed powder consisting essentially of 10 to 70 wt % inorganic powder capable of forming a metal phosphate and 30 to 90 wt % phosphoric-acid-resistant inorganic powder, forming said mixture into a sheet having a porous structure, impregnating said sheet with phosphoric acid, and heat-treating the sheet so that the said inorganic powder, capable of forming a metal phosphate, is converted into a metal phosphate.

EP 0 306 567 A1

# A FUEL CELL ELECTROLYTE MATRIX AND A METHOD FOR ITS MANUFACTURE

The present invention concerns an electrolyte-retaining matrix for use in a fuel cell which uses phosphoric acid as an electrolyte.

In the past, phosphoric-acid-resistant inorganic powders such as powdered SiC, SiC whiskers or $Ta_2O_5$, have generally been used as matrices for fuel cells which use phosphoric acid as an electrolyte. Such matrices have been manufactured by (A) mixing the inorganic powder with a small amount of polytetrafluoroethylene (as a binding agent), adding an appropriate amount of solvent and forming the mixture into a thin film on the electrodes for example by blowing or painting. The solvent is then removed by heating or drying and the film is impregnated with phosphoric acid. Alternatively (B) a thin film has been formed directly on the electrodes as in the method (A) using phosphoric acid as a solvent. As further alternative (C), a thin film has been formed on the electrodes, without using a macromolecular binding agent such as polytetrafluoroethylene, by using a metal phosphate such as zirconium phosphate as a binding agent.

The following characteristics are required in a fuel cell electrolyte matrix, of the type described above, namely:

(1) The matrix must be stable against hot, concentrated phosphoric acid, which is one of the operating conditions of such a fuel cell.

(2) The matrix must be an electrical insulator, and must have a sufficiently high ionic conductivity.

(3) The matrix must have the ability to block gas permeation at the time of impregnation with phosphoric acid, i.e. must have a high bubble (or foam) pressure.

(4) The matrix must have a high affinity for phosphoric acid, so that the osmotic diffusion of phosphoric acid is rapid.

(5) The matrix material must have sufficient mechanical strength to allow it to be formed as a thin film.

In the case of matrices manufactured by the aforementioned methods (A) and (B), however, even though the requirement (1) may be satisifed, the strong water-repellant nature of polytetrafluoroethylene causes a reduction in the affinity of the matrix for phosphoric acid if the amount of polytetrafluoroethylene used is increased in order to improve the mechanical strength. As a result, the bubble pressure and permeation rate are also reduced and the ionic conductivity is also inferior. On the other hand, matrices which have a small polytetrafluoroethylene content lack mechanical strength and stability, so that the film cannot be made very thin. As a result, there are limits to the extent to which the resistance of the matrix can be lowered, and the useful life of the fuel cell is insufficient and unstable. Thus matrices manufactured by methods (A) and (B) are generally limited in terms of matrix resistance, ionic conductivity, bubble pressure and useful life of the fuel cell.

Furthermore, in the case of matrices manufacture by method (C), even though the problems created by the water-repelling characteristics are essentially inferior, the binding characteristics are essentially inferior. As a result, such matrices lack mechanical strength. Thus, the disadvantages of the above-mentioned matrices with a small polytetrafluoroethylene content are magnified.

According to the present invention there is provided a fuel cell electrolyte matrix which consists essentially of 4 to 66 wt % powdered metal phosphate, 12 to 85 wt % phosphoric-acid-resistant inorganic powder, and 6 to 66 wt % polytetrafluoroethylene.

The present invention also provides a method for manufacturing a fuel cell electrolyte matrix, which comprises mixing 6 to 66 parts by weight of polytetrafluoroethylene with 40 to 94 parts by weight of a mixed powder consisting essentially of 10 to 70 wt % inorganic powder capable of forming a metal phosphate and 30 to 90 wt % phosphoric-acid-resistant inorganic powder, forming said mixture into a sheet having a porous structure, impregnating said sheet with phosphoric acid, and heat-treating the sheet so that the said inorganic powder, capable of forming a metal phosphate, is converted into a metal phosphate.

The present invention further provides a method of manufacturing a fuel cell electrolyte matrix which comprises forming a porous sheet comprising polytetrafluoroethylene containing a phosphoric-acid-resistant inorganic powder, impregnating the pores of said sheet with an inorganic compound, in the form of a liquid or solution, which is capable of forming a metal phosphate, converting said inorganic compound into a metal phosphate or a compound capable of forming a metal phosphate, impregnating the film with phosphoric acid and heat-treating the film to convert said compound into a metal phosphate, the method using 6 to 60 wt % of polytetrafluoroethylene and 40 to 94 wt % of material consisting essentially of inorganic compound capable of forming a metal phosphate and phosphoric-acid-resistant powder.

The hydrophilic characteristics of the matrix are improved by including 4 wt % or more powdered metal phosphate in the matrix. By setting the upper limit of this metal phosphate content at 66 wt %, the proportions of phosphoric-acid-resistant inorganic powder and polytetrafluoroethylene can be selected to provide a suitable mixture ratio with respect to the three constituents. The effect of the phosphoric-acid-resistant inorganic powder is to stabilize the physical properties of the film, and to retain phosphoric acid for the reaction. Since at least 6 wt % polytetrafluoroethylene is included, mechanical strength of the film is ensured.

By setting the polytetrafluoroethylene content at 6 wt % or greater, an adequate film strength is achieved. By setting the upper limit of this content at 60 wt % the required affinity for phosphoric acid is obtained by controlling the water-repelling characteristics of the polytetrafluoroethylene.

In the method of manufacture of a matrix according to the invention referred to above, in relation to the prior art, the hydrophilicity of the film is increased, and the electrical conductivity of the product (which arises from the electrical conductivity of SiC in cases where SiC alone is used in large amounts as a phosphoric-acid-resistant inorganic powder) is decreased.

Although the matrix of the present invention is composed of three main constituents, namely, a powdered metal phosphate, a phosphoric-acid-resistant inorganic powder, and polytetrafluoroethylene, small amounts of other components or additives may be included in this basic composition.

Although it is possible to use powdered metal phosphate in forming the film, it is desirable in this process to use an inorganic powder which is capable of forming a metal phosphate, rather than actual powdered metal phosphate.

In the manufacturing process, the inorganic powder is mixed with a phosphoric-acid-resistant powder, an amount of polytetrafluoroethylene sufficient to provide the desired mechanical strength in the finished product is mixed with this powder mixture and the resulting mixture is kneaded by ordinary methods, and is formed into a film for example by rolling or extrusion. Thereafter the spaces in the resulting film are filled with phosphoric acid, and the film is heated in this state to a temperature of 100 to 370° C (preferably 200 to 350° C), so that the inorganic powder capable of forming a metal phosphate is converted into a metal phosphate.

The polytetrafluoroethylene may be used in a general plastic state, or may be mixed in a fine granular state. In some cases, the polytetrafluoroethylene may be rolled or drawn beforehand so that a porous film is formed. In such cases, the porous film is formed from polytetrafluoroethylene which contains a phosphoric-acid-resistant inorganic powder of the type described above. The pores of such a porous polytetrafluoroethylene film containing a phosphoric-acid-resistant inorganic powder are impregnated with a liquid or solution-form compound which is capable of being converted into a metal phosphate. Afterward, this compound is converted into a metal phosphate or an inorganic compound capable of forming a metal phosphate. This conversion can be accomplished by a chemical reaction or pyrolysis or both so that the film is filled with this metal phosphate or compound capable of forming a metal phosphate. Next, the film is impregnated with phosphoric acid and heat-treated as described above.

Although the content of polytetrafluoroethylene used in the manufacturing method is 6 to 60 wt %, this is preferably 13 to 40 wt %, and the remaining 40 to 94 wt %, preferably 60 to 87 wt %, of the composition consists of the phosphoric-acid-resistant powder and the inorganic powder capable of being converted into a metal phosphate. Desirably, the content of the inorganic powder capable of being converted into a metal phosphate is 10 wt % or greater, and the content of the phosphoric-acid-resistant powder is 30 wt % or greater.

A zirconium compound, titanium compound or aluminum compound, may be used as the inorganic powder capable of being converted into a metal phosphate. However, zirconium oxide is preferred. Furthermore, alkoxides or oxychlorides of the zirconium, titanium or aluminium may be used as liquid or solution-form compounds which are capable of being converted into a phosphate. Furthermore, SiC, $Ta_2O_5$ or a carbonaceous powder, may be used as the phosphoric-acid-resistant inorganic powder; SiC being most desirable.

The above-mentioned inorganic powders are preferably prepared with a particle size of 10 microns or less. The phosphoric-acid-resistant inorganic powder itself has an affinity for phosphoric acid, and naturally contributes to the overall affinity of the mixture for phosphoric acid. However, this powder also serves to prevent the deposition (on the film surface) of the aforementioned inorganic powder capable of forming a metal phosphate when the latter powder is converted into a metal phosphate. Specifically, the inorganic powder capable of forming a metal phosphate reacts with phosphoric acid so that it is temporarily converted into a solute state. At this time, the phosphoric-acid-resistant powder prevents this solute substance from being pushed out on the surface of the film as a result of the water-repelling characteristics of the polytetrafluoroethylene. Furthermore, this phosphoric-acid-resistant inorganic powder also serves to stabilize the film structure, and the pore size and void ratio, can also be controlled by means of this phosphoric-acid-resistant inorganic powder. Specifically, by using an inorganic powder with a small particle size, the pore size can be decreased so that a film with a high bubble pressure is obtained. Conversely, by using particles with a somewhat increased particle size, it is possible to obtain a film with a large pore size and a large void ratio, and consequently a high permeation rate. Accordingly, by laminating (or otherwise forming into an integral unit) films of these two types, it is possible to form a film which has both a high permeation rate and high bubble pressure.

In the present invention, the conversion of the inorganic powder capable of forming a metal phosphate into such a metal phosphate causes an increase in the hydrophilicity of the film; however, the details of the mechanism of this action are not completely clear. It is thought that this effect is attributable to the following process: i.e. when certain minimum amounts of polytetrafluoroethylene and inorganic powder are mixed and kneaded, and the polytetrafluoroethylene is fibrilized in order to increase the mechanical strength, the polytetrafluoroethylene fibrils wind around the inorganic powder particles, so that the hydrophilicity of the inorganic powder is blocked, resulting in a low overall hydrophilicity. However, when the inorganic powder is converted into a metal phosphate as described above, the inorganic powder around which the polytetrafluoroethylene fibrils are wound dissolves and is re-deposited so that it is loosened from the fibrils, thus resultting overall in a structure in which the inorganic powder is caught in a fibril net. As a result, the effective exposed surface area of the inorganic powder is increased. An appropriate hydrophilicity is obtained by a similar effect in cases where a liquid or solution-form precursor compound which is capable of forming a metal phosphate is used. In this case, the heat treatment using phosphoric acid acts to convert the precursor compound into a compound which is stable with respect to phosphoric acid.

The phosphoric acid and the inorganic powder, capable of forming a metal phosphate, are caused to react in a way in which the spaces inside the film are filled with phosphoric acid. This is done in order to prevent the inorganic substance dissolved in the phosphoric acid from being eluted from the film. For example, this process cannot be accomplished by a method involving immersion of the film in liquid phosphoric acid followed by heating. Specifically, the process is carried out as follows, namely, the film containing the inorganic powder capable of forming a metal phosphate is impregnated for example with alcohol, after which the film is filled with phosphoric acid by substitution in the order water to phosphoric acid, or else the film is directly impregnated with phosphoric acid, after which the film is sandwiched between sheets for example, of carbon paper, which has been subjected to a water-repulsion treatment by means of a dispersion of polytetrafluoroethylene, and some of the acid is retained in the spaces of the carbon paper. The film is then heated to a prescribed temperature. The moisture created by the dehydration reaction of the phosphoric acid and the inorganic substance diffuses via the pores of the carbon paper, and thus prevents the phosphoric acid from becoming insufficient, for example due to volatilization, and prevents the film from drying out. Accordingly, the phosphoric acid in the film is supplemented by the phosphoric acid in the carbon paper.

Some examples of the manufacture of the matrix of the present invention are described below.

Example 1.

A mixed powder was formed consisting of 50% powdered $\alpha$-SiC (particle size: 3 microns), 35% finely powdered $ZrO_2$ and 15% polytetrafluoroethylene. 40 parts by weight of a liquid lubricant was added to 100 parts by weight of the mixed powder, and the resulting mixture was formed into a sheet with a thickness of 0.1 mm by paste extrusion and rolling. The liquid lubricant was then vaporized and removed by heating the sheet to 300 °C.

Next, the sheet was immersed for 24 hours in isopropyl alcohol, then for 24 hours in water, and finally for 24 hours in ortho-phosphoric acid, so that the spaces in said sheet were impregnated with orthophosphoric acid and the ortho-phosphoric acid was caused to adhere to the surfaces of said sheet. This sheet was then sandwiched between sheets of carbon paper which had been subjected to a water-repulsion treatment by means of polytetrafluoroethylene. With the entire area of the sheet placed under a light pressure, the sheet was gradually heated to 350 °C. The sheet was maintained at this temperature for eight hours, and was then cooled to room temperature. The sheet was then washed with water and dried to produce a matrix sheet with a thickness of 0.12 mm.

Example 2

A matrix sheet with a thickness of 0.12 mm was produced exactly as in Example 1, except that the mixture used consisted of 34% powdered $\alpha$-SiC (particle size: 0.6 microns), 46% finely powdered $ZrO_2$ and 20% polytetrafluoroethylene.

Example 3

The respective materials obtained after paste extrusion in Examples 1 and 2 were laminated and rolled to produce a two-layer laminated sheet with a thickness of 0.13 mm. A matrix sheet with a thickness of 0.15 mm was then obtained by the process used above.

Example 4

A mixed powder was formed consisting of 85% powdered $\beta$-SiC (particle size: 0.37 microns) and 15% polytetrafluoroethylene: 37 parts of weight of a liquid lubricant was mixed with 100 parts by weight of this mixed powder, and the resulting mixture was paste-extruded and rolled to produce a sheet with a thickness of 0.1 mm. The liquid lubricant was then removed by heating.

The sheet was then immersed in a tetrabutyl zirconate solution so that the film became impregnated with tetrabutyl zirconate. Next, hydrolysis was effected by immersing the film in water at 80°C, so that the tetrabutyl zirconate was converted into hydrated zirconium oxide. Thus, a film charged with zirconium oxide was obtained.

The film, obtained as described above, was immersed for 24 hours in orthophosphoric acid, so that said film became impregnated with phosphoric acid. Thereafter, the film was removed, sandwiched between sheets of carbon paper which had been subjected to a water-repulsion treatment, and heated for 8 hours at 350°C to produce a matrix sheet.

Example 5

As a comparative example, a matrix sheet obtained by removing the liquid lubricant following paste extrusion and rolling in Example 4 was produced.

Example 6

As a comparative example, a matrix sheet was produced as in Example 1, except that the mixture used consisted of 56% $\alpha$-SiC, 39% finely powdered $ZrO_2$ and 5% polytetrafluoroethylene. When the liquid lubricant was removed following paste extrusion and rolling, slight cracking occured in the film.

The bubble pressure, phosphoric acid permeation rate and strength were measured for the respective matrix sheets produced in the above-mentioned examples. The results obtained are shown in the following table:

| Example | Bubble (or foam) pressure (kg/cm) | Phosphoric Acid Permeation Rate (mm/hour) | Strength (kg/mm) |
|---|---|---|---|
| 1 | 2.5 | 32 | 0.71 |
| 2 | 0.5 | 55 | 0.50 |
| 3 | 1.0 | 43 | 0.59 |
| 4 | 1.3 | 30 | 0.63 |
| 5 | 0.1 | 5 | 0.51 |
| 6 | 0.05 | 44 | 0.03 |

As described above, the present invention makes it possible to achieve a satisfactory reduction of the water-repellent characteristics of polytetrafluoroethylene used as a binding agent. Accordingly, the mixture

5

ratio of polytetrafluoroethylene can be increased so that a sufficient film strength is obtained. Furthermore, a high bubble pressure is obtained by forming a fine fibrilized net of polytetrafluoroethylene. Moreover, since the amount of polytetrafluoroethylene used can be large, the molding characteristics of the product are favourable, and the yield can be increased. Accordingly, a highly reliable product can be obtained. As a result, the present invention has the effect of improving the performance and reliability of the fuel cell as a whole, and of increasing the useful life and reducing the cost of the fuel cell.

**Claims**

1. A fuel cell electrolyte matrix which consists essentially of 4 to 66 wt % powdered metal phosphate, 12 to 85 wt % phosphoric-acid-resistant inorganic powder, and 6 to 66 wt % polytetrafluoroethylene.

2. A method of manufacturing a fuel cell electrolyte matrix, which comprises mixing 6 to 60 parts by weight of polytetrafluoroethylene with 40 to 94 parts by weight of a mixed powder consisting essentially of 10 to 70 wt % inorganic powder capable of forming a metal phosphate and 30 to 90 wt % phosphoric-acid-resistant inorganic powder, forming said mixture into a sheet having a porous structure, impregnating said sheet with phosphoric acid, and heat-treating the sheet so that the said inorganic powder, capable of forming a metal phosphate, is converted into a metal phosphate.

3. A method according to claim 2, in which a mixed powder consisting of said inorganic powder capable of forming a metal phosphate, said phosphoric-acid-resistant inorganic powder and said polytetrafluoroethylene is obtained by co-coagulation.

4. A method according to claim 2 in which a polytetrafluoroethylene film which has been made porous is used.

5. A method of manufacturing a fuel cell electrolyte matrix which comprises forming a porous sheet comprising polytetrafluoroethylene containing a phosphoric-acid-resistant inorganic powder, impregnating the pores of said sheet with an inorganic ompound, in the form a liquid or solution, which is capable of forming a metal phosphate, converting said inorganic compound into a metal phosphate or a compound capable of forming a metal phosphate, impregnating the film with phosphoric acid and heat-treating the film to convert said compound into a metal phosphate, the method using 6 to 60 wt % of polytetrafluoroethylene and 40 to 94 wt % of material consisting essentially of inorganic compound capable of forming a metal phosphate and phosphoric-acid-resistant powder.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 947 899  (ENGELHARD MINERALS & CHEMICALS CORP.)<br>* Claims 4,5,8; page 2, line 13 - page 3, paragraph 2 * | 1-4 | H 01 M   8/02<br>H 01 M   2/16 |
| X | EP-A-0 216 463  (WESTINGHOUSE ELECTRIC CORP.)<br>* Claims 1-8,14-16,18; column 4, lines 26-58; column 6, line 37 - column 7, line 11; column 8, lines 4-44 * | 1 | |
| Y | EP-A-0 060 560  (HITACHI LTD)<br>* Page 5, line 2 - page 6, line 22 * | 2-4 | |
| Y | GB-A-1 163 717  (ENGELHARD MINERALS & CHEMICAL CORP.)<br>* Claims 1-4,7,12,13; example 1; page 4, lines 48-52 * | 2-4 | |
| A | US-A-4 517 260  (K. MITSUDA)<br>* Column 3, lines 7-31 * | 1 | |
| A | US-A-4 661 423  (M. UENO et al.)<br>* Claims 1,4; column 3, lines 7-31 * | 1 | TECHNICAL FIELDS SEARCHED (Int. Cl.4)<br><br>H 01 M |
| A | CHEMICAL ABSTRACTS, vol. 94, no. 24, June 1981, page 174, abstract no. 195031g, Columbus, Ohio, US; & JP-A-81 18 366 (SANYO ELECTRIC CO., LTD) 21-02-1981<br>* Abstract * | 1 | |
| A | PATENT ABSTRACTS OF JAPAN, vol. 8, no. 149 (E-255)[1586], 12th July 1984; & JP-A-59 56 364 (MITSUBISHI DENKI K.K.) 31-03-1984<br>-/- | 1 | |

The present search report has been drawn up for all claims

| Place of search | Date of completion of the search | Examiner |
|---|---|---|
| THE HAGUE | 27-04-1988 | D'HONDT J.W.        - |

EPO FORM 1503 03.82 (P0401)

## EUROPEAN SEARCH REPORT

European Patent
Office

Application Number

EP 87 30 7869

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 074 111 (HITACHI CHEMICAL CO.) * Claims 1,2,10,14-16,24,26; page 7, line 20 - page 8, line 6; page 8, line 21 - page 9, line 9; page 9, lines 12-22; page 10, lines 12-19; page 12, lines 19-24; example 2 * ----- | 5 | |

TECHNICAL FIELDS
SEARCHED (Int. Cl.4)

The present search report has been drawn up for all claims

| Place of search | Date of completion of the search | Examiner |
|---|---|---|
| THE HAGUE | 27-04-1988 | D'HONDT J.W. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)